# EUROPEAN PATENT SPECIFICATION

(11) **EP 2 327 664 B1**
(45) Date of publication and mention of the grant of the patent: **29.05.2013**
(21) Application number: 09817264.6
(22) Date of filing: 25.09.2009
(51) Int. Cl.: C02F 1/26, B01D 11/04

(54) **METHOD OF PHYSICOCHEMICAL TREATMENT FOR WASTE WATER OF ORIMULSION OIL**
VERFAHREN ZUR PHYSIOCHEMISCHEN BEHANDLUNG DES ABWASSERS EINES ORIMULSION-ÖLS
PROCÉDÉ DE TRAITEMENT PHYSICOCHIMIQUE POUR DE L'EAU RÉSIDUAIRE D'HUILE D'ORIMULSION

(30) Priority: 27.09.2008 CN 200810198874
(43) Date of publication of application: 01.06.2011
(73) Proprietor: Guangdong Electric Power Design Institute, Guangdong 510663 (CN)
(72) Inventor: LONG, Guoqing, Guangzhou Guangdong 510663 (CN); JIANG, Changping, Guangzhou Guangdong 510663 (CN); HE, Xiaohua, Guangzhou Guangdong 510663 (CN); HUANG, Yu, Guangzhou Guangdong 510663 (CN); LI, Bo, Guangzhou Guangdong 510663 (CN); LUO,Bixiong, Guangzhou,Guangdong 510663 (CN); MO,Zigao, Guangzhou,Guangdong 510663 (CN); MAO ,Weibing, Guangzhou,Guandong 510663 (CN)
(74) Representative: Gervasi, Gemma
(86) International application number: PCT/CN2009/074238
(87) International publication number: WO 2010/037350

(56) References cited:
- EP-A1- 0 950 429
- EP-A2- 0 454 356
- CN-A- 1 083 513
- CN-A- 1 278 549
- US-A- 2 383 363
- US-A- 4 761 222
- SOMMERVILLE, M, LUNEL, T, BAILEY, N: "Orimulsion", INTERNATIONAL OIL SPILL CONFERENCE, 31 December 1997 (1997-12-31), pages 479-484, XP002672280,

## Description

### FIELD OF THE INVENTION

The present invention relates to the field of wastewater treatment, and in particular to a method for physicochemical treatment of wastewater containing orimulsion oil.

### BACKGROUND OF THE INVENTION

Orimulsion oil is an emulsion of naphthenic-base heavy crude oil obtained in Orinoco River in Venezuela, emulsifier and water. During Orinoco bitumen exploitation, steam is firstly injected in to the well to allow the thermodilution of the bitumen which is then sucked out of the ground, the heavy crude oil is processed to remove the steam and then transported to the orimulsion plant for demineralization processing, and after a series of dynamic and static grinding and mixing, surfactants are added to obtain a dilute emulsion, called as Orimulsion Oil. The orimulsion oil is convenient for transportation and used in normal temperature, and it meets the requirement of fuel oil transportation and atomization. Therefore, the orimulsion oil is widely used in many power plants. During the using of orimulsion oil, wastewater containing orimulsion oil will be generated. This kind of wastewater is an oil-in-water and non-Newtonian liquid that has a density close to water and in which water is in continuous phase and oil is in dispersed phase. The oil drop is covered by the surfactant to form a hydrophilic film thereon. The orimulsion oil can be dissolved with any proportion of water, and the obtained solution is quite stable. If the wastewater containing orimulsion oil is directly discharged, it will result in the environment pollution. Therefore, it should be processed up to standard before discharging.

In the prior art, the method for treating wastewater containing orimulsion oil mainly includes treatment methods such as air flotation and chemical dosing method, method of filtering with macromolecule super filter, and biochemical method. However, these treatment methods have the following defects:
1. In the air flotation and chemical dosing method, the amount of chemical substance is difficult to be controlled, and the scum generated is also difficult to be removed. Furthermore, the treatment operation is relatively complicated, the workload for maintenance is heavy, and the costs are relatively high.
2. In the method of filtering with macromolecule super filter, the filtering ability of the macromolecule material is reduced quickly till the adsorption is in saturation and completely ineffective when the wastewater contains a relatively high amount of oil. Another defect of using the macromolecule material is that the investment is high and the ordinary operation is expensive.
3. In the biochemical treatment method, the wastewater containing orimulsion oil is dissoluble and low biodegradable. This method can not reach the designed amount of treatment, and is easily affected by the water quality. The self-consumption of activated sludge caused by the insufficient BOD makes the sewage sludge dispersed such that the concentration of sludge is difficult to be maintained constantly.

Accordingly, it is desirable to develop a method for the treatment of wastewater containing orimulsion oil that is economical and convenient for operation management and good for environment protection.

### SUMMARY OF THE INVENTION

It is an object of the present invention to provide a method for physicochemical treatment of wastewater containing orimulsion oil, which is simple in operation and convenient for operation management.

To achieve the above object, the technical solution of the present invention is as follows:
A method for physicochemical treatment of wastewater containing orimulsion oil comprises the following steps:
   wastewater containing orimulsion oil is entered into the bottom of an extractive equipment intermittently and is raised spirally in the extractive equipment;
   the wastewater is then mixed with extracting solvent adequately that is pre-placed in the extractive equipment;
   the mixture is separated naturally such that orimulsion oil is kept in the extracting solvent forming an extraction phase above a water phase; and
   the water phase is discharged from the bottom of the extractive equipment.

The extracting solvent is pre-placed in the extractive equipment and may be deemed as a liquid floating filter. When the wastewater containing orimulsion oil is entered into the bottom of an extractive equipment intermittently and is raised spirally in the extractive equipment, the wastewater is then mixed with extracting solvent adequately such that the wastewater is separated into two layers in which the orimulsion oil is in the extraction phase. For the difference in density, the extraction phase is above the water phase. After meeting the requirement, the water phase may be discharged from the bottom of the extractive equipment. The whole physicochemical treatment is simple and easy in operation and convenient for management. The orimulsion oil is in the extraction phase, and can be burned directly or be further recycled to save the costs.

Preferably, before the wastewater of orimulsion oil is entered into the extractive equipment, normal floating impurities are removed from the wastewater containing orimulsion oil, so as to improve the separation result of extraction.

Preferably, the extracting solvent is kerosene or diesel oil. The orimulsion oil can be better dissolved in kerosene or diesel oil, and the efficiency in removal of oil is relatively high. It can be used as auxiliary fuel for power plant directly to avoid the generation of secondary pollutants such as oil sludge and scum, and therefore the costs for the treatment of the extraction phase is saved.

Preferably, the volume ratio of the extracting solvent to the wastewater of orimulsion oil is in a range of 1 2 to 1 3. This is good for adequate mixing of the extracting solvent and the wastewater, for improving the efficiency of extraction and for discharging the water phase.

Preferably, in the extractive equipment, the extracting solvent and the wastewater are naturally mixed with each other for 5 to 10 minutes according to density.

When the content of the orimulsion oil in the wastewater is higher than 5000ppm, the wastewater of orimulsion oil is passed through two-stage extractive equipments in series so as to ensure good quality of oil removal.

The water phase may be discharged from the bottom of the extractive equipment in an automatic drainage manner with a liquid level meter or in a siphoning manner that a free water outlet is lower than the dividing line between the water phase and the extraction phase.

The present invention has the following advantages: 1. as the extracting solvent, kerosene or diesel oil can dissolve the orimulsion oil effectively to form an extraction phase separated from the wastewater, and the removal ratio of orimulsion oil is 95%. 2. for the extraction phase is the mixture of kerosene or diesel oil and orimulsion oil, it can be recycled to be used as auxiliary fuel for power plant directly to avoid the generation of secondary pollutants such as oil sludge and scum, and to save energy and reduce emission. 3. the present invention is simple and easy for operation, and convenient for management.

### BRIEF DESCRIPTION OF THE DRAWINGS

Fig. 1 is a flowchart of an embodiment of the present invention;
Fig. 2 is a schematic view showing the extracting phase and the water phase in the extractive equipment.

### DETAILED DESCRIPTION OF THE PREFERRED EMBODIMENT

Many aspects of the present invention will be described in detail in the following embodiments accompanying with the drawings.

### Embodiment 1: wastewater containing normal mineral oil and orimulsion oil

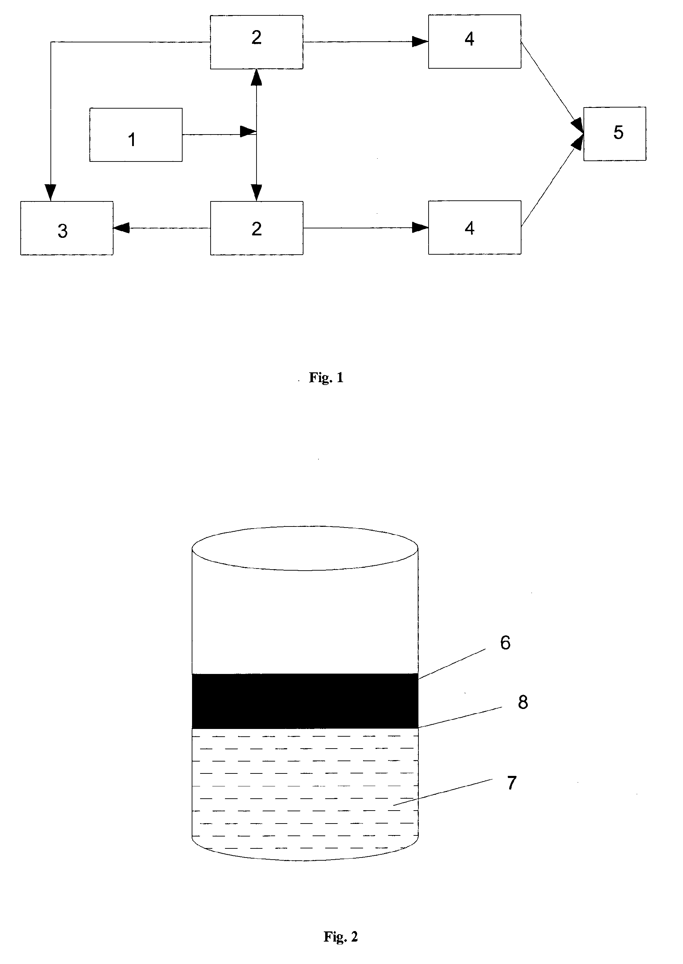

Referring to Fig. 1, after the wastewater in a regulating pond 1 is entered into a normal oil-water separator 2, the normal mineral oil and the wastewater are separated from each other. Under the gravity effect, the normal mineral oil flows into an oil collector 3 via elevation setting, while the wastewater is entered into the extractive equipment 4 intermittently from its bottom. Kerosene as the extracting solvent is added into the extractive equipment 4, and the volume ratio of the extracting solvent to the wastewater containing orimulsion oil is 1:2. The wastewater is raised spirally in the extractive equipment 4 and mixed with the kerosene adequately for 10 minutes. After the interphase mass transfer between the kerosene and the wastewater containing orimulsion oil, the orimulsion oil is extracted from the wastewater into the kerosene to form an extraction phase which is separated from the water phase. For the difference in density, the water phase is below the extraction phase. The water phase is discharged from the drainpipe 5 on the bottom of the extractive equipment after the orimulsion oil is taken out. In this embodiment, two oil-water separators 2, two extractive equipments 4 are both arranged in parallel to process wastewater in large amounts. When the content of orimulsion oil is higher than 5000ppm, if a single stage extraction is insufficient, then an additional extractive equipment can be provided in series in addition to the extractive equipment 4, so as to enable the wastewater treatment to be up to standard. In this embodiment, the total oil removal ratio is 97%, which reaches the grade II discharge standard of the second period of time as prescribed in Integrated Wastewater Discharge Standard GB 8978 1996 in China.

As show in Fig. 2, in the extractive equipment 4, the water phase 7 after extraction is located at the bottom of the equipment and the extraction phase 6 is located at the top of the equipment, with a blurry dividing line 8 between these two phases. The water phase is discharged from the bottom of the extractive equipment 4 in siphoning manner, that is, the drainpipe 5 is formed in U shape with a free water outlet lower than the dividing line 8 between the water phase and the extraction phase. Alternatively, the water may be discharged automatically by using a liquid level meter.

### Embodiment 2: the wastewater only contains orimulsion oil

The difference between this embodiment and the embodiment 1 lies in that: diesel oil as the extracting solvent is added into the extractive equipment 4, and the volume ratio of the diesel oil to the wastewater of orimulsion oil is 1:3; the wastewater in the regulating pond 1 is entered into the extractive equipment 4 from its bottom, and raised spirally in the extractive equipment 4 and mixed with the diesel oil adequately for 5 minutes. After the interphase mass transfer between the diesel oil and the wastewater containing orimulsion oil, the orimulsion oil is extracted from the wastewater into the diesel oil to form an extraction phase which is separated from the water phase. The water phase is discharged from the drainpipe at the bottom of the extractive equipment. The total oil removal ratio is 96.4%, which reaches the grade II discharge standard of the second period of time as prescribed in Integrated Wastewater Discharge Standard GB 8978 1996 in China, that is to say, the concentration of orimulsion oil discharged is lower than 10ppm.

It has been proved by tests and practices that kerosene and diesel oil can be used as the extracting solvent in the treatment of the wastewater containing orimulsion oil. As the extracting solvent, the kerosene and diesel oil can be obtained easily and are relatively cheap, and only a little amount of them is required, and furthermore they are safe and stable for use, and are innocuous and non-corrosive and can be recycled to be used as fuel.

## Claims

1. A method for physicochemical treatment of wastewater containing orimulsion oil, **characterized by** comprising the following steps:
wastewater containing orimulsion oil is entered into the bottom of an extractive equipment intermittently and is raised spirally in the extractive equipment;
the wastewater is then mixed with extracting solvent adequately that is pre-placed in the extractive equipment;
the mixture is separated naturally such that orimulsion oil is kept in the extracting solvent forming an extraction phase above a water phase; and
the water phase is discharged from the bottom of the extractive equipment.

2. The method of claim 1, **characterized in that** before the wastewater of orimulsion oil is entered into the extractive equipment, normal floating impurities are removed from the wastewater containing orimulsion oil.

3. The method of claim 1 or 2, **characterized in that** the extracting solvent is kerosene or diesel oil.

4. The method of claim 1 or 2, **characterized in that** the volume ratio of the extracting solvent to the wastewater containing orimulsion oil is in a range of 1 : 2 to 1 : 3.

5. The method of claim 1 or 2, **characterized in that** in the extractive equipment, the wastewater is naturally mixed with extracting solvent for 5 to 10 minutes according to density.

6. The method of claim 1 or 2, **characterized in that** when the content of the orimulsion oil in the wastewater is higher than 5000ppm, the wastewater containing orimulsion oil is passed through two-stage extractive equipments in series.

7. The method of claim 1 or 2, **characterized in that** the water phase is discharged from the bottom of the extractive equipment in an automatic drainage manner by using a liquid level meter or in a siphoning manner that a free water outlet is lower than the dividing line between the water phase and the extraction phase.

## Patentansprüche

1. Verfahren zur physikalisch-chemischen Behandlung von Abwasser, welches Orimulsionsöl enthält, wobei dieses Verfahren **dadurch gekennzeichnet ist, dass** es die folgenden Schritte umfasst:
- Abwasser, welches Orimulsionsöl enthält, wird auf intermittierende Weise in den unteren Bereich einer Extraktionsvorrichtung gebracht und in dieser Extraktionsvorrichtung spiralförmig nach oben befördert;
- das Abwasser wird dann mit extrahierendem Lösemittel, welches zuvor in die Extraktionsvorrichtung eingebracht worden ist, auf adäquate Weise gemischt;
- das Gemisch wird dann auf natürliche Weise dergestalt getrennt, dass das Orimulsionsöl in dem extrahierenden Lösemittel verbleibt und oberhalb der wässrigen Phase eine Extraktionsphase bildet; und
- die wässrige Phase wird aus dem unteren Bereich der Extraktionsvorrichtung abgeleitet.

2. Verfahren nach Anspruch 1, **dadurch gekennzeichnet, dass** vor dem Einbringen des orimulsionshaltigen Abwassers in die Extraktionsvorrichtung die normalerweise in dem orimulsionshaltigen Abwasser schwimmenden Verunreinigungen aus diesem entfernt werden.

3. Verfahren nach Anspruch 1 oder 2, **dadurch gekennzeichnet, dass** das extrahierende Lösemittel Kerosin oder Dieselöl ist

4. Verfahren nach Anspruch 1 oder 2, **dadurch gekennzeichnet, dass** das Volumenverhältnis von extrahierendem Lösemittel zum orimulsionshaltigen Abwasser im Bereich von 1:2 bis 1:3 liegt.

5. Verfahren nach Anspruch 1 oder 2, **dadurch gekennzeichnet, dass** in der Extraktionsvorrichtung das Abwasser mit dem extrahierenden Lösemittel 5 bis 10 Minuten lang je nach der Dichte auf natürliche Weise gemischt wird.

6. Verfahren nach Anspruch 1 oder 2, **dadurch gekennzeichnet, dass**, wenn der Gehalt an Orimulsionsöl im Abwasser höher als 5000 ppm ist, das orimulsionshaltige Abwasser durch zwei in Reihe geschaltete Extraktionsvorrichtung geleitet wird.

7. Verfahren nach Anspruch 1 oder 2, **dadurch gekennzeichnet, dass** die wässrige Phase aus dem unteren Bereich der Extraktionsvorrichtung durch automatische Dränage unter Verwendung eines Flüssigkeitsstandanzeigers oder nach der Wirkungsweise eines Siphons dergestalt abgeleitet wird, dass eine freie Wasseraustrittsstelle niedriger gelegen ist als die Trennlinie zwischen der wässrigen Phase und der Extraktionsphase.

## Revendications

1. Procédé de traitement physico-chimique d'une eau résiduaire contenant une huile d'orimulsion, **caractérisé en ce qu'**il comprend les étapes suivantes :
l'eau résiduaire contenant une huile d'orimulsion est introduite par intermittence par le bas d'un équipement d'extraction et monte dans l'équipement d'extraction en formant une spirale ;
l'eau résiduaire est ensuite correctement mélangée avec un solvant d'extraction qui est préalablement placé dans l'équipement d'extraction ;
le mélange se sépare naturellement, de façon que l'huile d'orimulsion reste dans le solvant d'extraction formant une phase d'extraction au-dessus d'une phase aqueuse ; et
l'eau résiduaire est déchargée par le bas de l'équipement d'extraction.

2. Procédé selon la revendication 1, caractérisé en qu'avant l'introduction de l'eau résiduaire d'huile d'orimulsion dans l'équipement d'extraction, les impuretés flottantes normales sont éliminées de l'eau résiduaire contenant une huile d'orimulsion.

3. Procédé selon la revendication 1 ou 2, **caractérisé en ce que** le solvant d'extraction est du kérosène ou une huile diesel.

4. Procédé selon la revendication 1 ou 2, **caractérisé en ce que** le rapport volumique entre le solvant d'extraction et l'eau résiduaire contenant une huile d'orimulsion est situé dans la plage allant de 1 : 2 à 1 : 3.

5. Procédé selon la revendication 1 ou 2, **caractérisé en ce que** dans l'équipement d'extraction, l'eau résiduaire se mélange naturellement au solvant d'extraction pendant 5 à 10 minutes en fonction de la densité.

6. Procédé selon la revendication 1 ou 2, **caractérisé en ce que** quand la teneur en huile d'orimulsion dans l'eau résiduaire est supérieure à 5000 ppm, l'eau résiduaire contenant une huile d'orimulsion est passée à travers des équipements d'extraction à deux étages en série.

7. Procédé selon la revendication 1 ou 2, **caractérisé en ce que** la phase aqueuse est déchargée par le bas de l'équipement d'extraction par drainage automatique en utilisant un dispositif de mesure de niveau de liquide ou par siphonage par un orifice de sortie d'eau libre se trouvant plus bas que la ligne de division entre la phase aqueuse et la phase d'extraction.
